# EUROPEAN PATENT APPLICATION

(11) **EP 1 541 536 A1**
(43) Date of publication of application: **15.06.2005**
(21) Application number: 03771402.9
(22) Date of filing: 29.07.2003
(51) Int. Cl.: C03C 17/25

(54) **INFRARED SHIELDING GLASS**

(30) Priority: 29.07.2002 JP 2002219921
(71) Applicant: Asahi Glass Company, Limited, Chiyoda-ku, Tokyo 100-8405 (JP)
(72) Inventor: TOMONAGA, Hiroyuki, c/o Asahi Glass Company, Ltd., Yokohama-shi, Kanagawa 221-8755 (JP); MORIMOTO, Takeshi, c/o Asahi Glass Company, Ltd., Yokohama-shi, Kanagawa 221-8755 (JP); SUNAHARA, Kazuo, c/o Asahi Glass Company, Ltd., Yokohama-shi, Kanagawa 221-8755 (JP)
(74) Representative: Müller-Boré & Partner Patentanwälte
(86) International application number: PCT/JP2003/009587
(87) International publication number: WO 2004/011381

(57) **Abstract**

An infrared shielding glass coated with an infrared shielding film which is excellent in heat resistance and exhibits high visible light transmittance, low infrared transmittance (especially infrared transmittance in a near infrared region) and high electromagnetic wave transmittance.

An infrared shielding glass comprising a glass substrate having at least one surface thereof coated with a coating liquid containing fine particles of conductive oxide and a matrix component to thereby provide an infrared shielding film, **characterized in that** the infrared shielding glass exhibits a transmittance at a wavelength of 1.0 µm of at most 35% and a transmittance at a wavelength of 2.0 µm of at most 20% and that the infrared shielding film has a surface resistivity of at least 1 MΩ/□.

## Description

### TECHNICAL FIELD

The present invention relates to an infrared shielding glass useful particularly as glass for vehicle or glass for building, and a process for its production.

### BACKGROUND ART

In recent years, an infrared shielding glass has been employed for vehicles or buildings for the purpose of shielding infrared rays (heat rays) entering into vehicles or buildings through glass for vehicle or glass for building thereby to prevent a temperature rise in vehicles or buildings and thereby to reduce an air conditioning load. Such glass for vehicle or glass for building is required to have a high visible light transmittance in order to secure safety and visibility. In addition to such requirements, glass having a high electromagnetic wave transmittance and being capable of reducing electromagnetic disturbance, is desired by wide spread use of e.g. mobile phones in recent years.

A technique to increase the heat ray-shielding property by imparting an infrared shielding property to glass has heretofore already been proposed. For example, it has been proposed to impart an infrared shielding property to glass itself by adding infrared absorptive ions to the glass substrate (e.g. JP-A-4-187539). Further, it has been proposed to impart an infrared shielding property by forming a conductive film on a glass surface (e.g. JP-A-63-206332, JP-A-1-145351 and JP-A-7-315876).

However, by the process of adding infrared absorptive ions to the glass substrate, it is difficult to increase the infrared shielding property while maintaining the visible light transmittance at a high level, and it is particularly difficult to increase the infrared shielding property within a wavelength range of from 1.5 to 2.7 µm. Further, by a method for forming a conductive film of e.g. ITO (tin-doped indium oxide) or silver on a glass surface by a method such as a sputtering method, an electron beam method, a vapor deposition method or a spray pyrolysis method, a coating film has high electrical conductivity, whereby it has been difficult for electromagnetic waves to pass through the glass. As described in the foregoing, it has been difficult to obtain glass which satisfies all of the requirements for visible light transmittance, infrared shielding properties and electromagnetic wave transmittance.

In order to solve the above-mentioned problems, it has been attempted to produce an infrared shielding glass by preparing a coating liquid having an infrared shielding powder dispersed in a matrix and applying such a coating liquid on a glass substrate to form a film. As such an infrared shielding powder, ITO may for example, be mentioned (e.g. JP-A-7-70481 and JP-A-8-41441).

On the other hand, in a case where an infrared shielding glass is used, for example, at an opening portion, a coating film is exposed in the atmosphere, and it is important to improve the durability such as abrasion resistance of the coating film. To improve the durability, it is necessary to form a coating liquid by mixing an infrared shielding powder together with an inorganic matrix component, applying the coating liquid on a glass substrate and then heat-treating it at a high temperature to form a hard coating film. However, ITO is an oxygen-deficient composite oxide, and especially with ITO having a high infrared shielding property, the degree of oxygen deficiency in the crystal lattice is high. Accordingly, if heat treatment in the atmosphere is carried out at a high temperature in order to improve the durability, oxidation of ITO will proceed, whereby the oxygen deficiency will be lost, and consequently there has been a problem that the infrared shielding property will be lost. Therefore, the high temperature heat treatment is required to be carried out in an atmosphere where no oxygen is present, i.e. in an inert atmosphere or in a reducing atmosphere, such being economically disadvantageous and poor in the productivity.

It is an object of the present invention to solve the above described problems of an infrared shielding glass and to provide an infrared shielding glass which has a low infrared transmittance (especially infrared transmittance in a near infrared region) (having a high infrared shielding property), a high electromagnetic wave transmittance, and a high visible light transmittance, and a process for its production.

### DISCLOSURE OF THE INVENTION

The present invention provides the following (1) to (16)
(1) An infrared shielding glass comprising a glass substrate having at least one surface thereof coated with a coating liquid containing fine particles of conductive oxide and a matrix component to thereby provide an infrared shielding film, characterized in that the infrared shielding glass exhibits a transmittance at a wavelength of 1.0 µm of at most 35% and a transmittance at a wavelength of 2.0 µm of at most 20% and that the infrared shielding film has a surface resistivity of at least 1 MΩ/□.
(2) The infrared shielding glass according to the above 1, which exhibits a visible light transmittance of at least 70% as prescribed in JIS R3106 (1998).
(3) The infrared shielding glass according to the above 1 or 2, wherein the glass substrate exhibits a visible light transmittance of at least 70% as prescribed in JIS R3106 (1998), a transmittance at a wavelength of 1.0 µm of at most 45% and a transmittance at a wavelength of 2.0 µm of from 40 to 70%.
(4) The infrared shielding glass according to the above 1 or 2, wherein the infrared shielding glass exhibits a transmittance at a wavelength of 1.0 µm of at most 25% and a transmittance at a wavelength of 2.0 µm of at most 15%.
(5) The infrared shielding glass according to the above 4, wherein the glass substrate exhibits a visible light transmittance of at least 70% as prescribed in JIS R3106 (1998), a transmittance at a wavelength of 1.0 µm of at most 30% and a transmittance at a wavelength of 2.0 µm of from 40 to 50%.
(6) The infrared shielding glass according to any one of the above 1 to 5, wherein the difference between the visible light transmittance of the infrared shielding glass and the visible light transmittance of the glass substrate is within 20%.
(7) The infrared shielding glass according to any one of the above 1 to 6, wherein the fine particles of conductive oxide in the infrared shielding film has an average primary particle diameter of at most 100 nm.
(8) The infrared shielding glass according to any one of the above 1 to 7, wherein the infrared shielding film has a film thickness of from 0.1 to 5.0 µm.
(9) The infrared shielding glass according to any one of the above 1 to 8, wherein in the coating liquid, the fine particles of conductive oxide and the matrix component are contained in the ratio of the fine particles of conductive oxide : the matrix = 1:9 to 9:1 by mass ratio as calculated as oxides.
(10) The infrared shielding glass according to any one of the above 1 to 9, wherein the fine particles of conductive oxide are at least one member selected from the group consisting of fine particles of ATO and fine particles of fluorinated ITO.
(11) The infrared shielding glass according to the above 10, wherein the coating liquid contains fine particles of fluorinated ITO, and the fine particles of fluorinated ITO has a fluorine concentration of from 0.1 to 10 mass%.
(12) The infrared shielding glass according to the above 10, wherein the infrared shielding film contains fine particles of fluorinated ITO, and the fine particles of fluorinated ITO has a fluorine concentration of from 0.05 to 10 mass%.
(13) The infrared shielding glass according to any one of the above 1 to 12, which has a haze of at most 7% as measured by a haze meter prescribed in JIS R3212 (1998), after 1,000 rotations under a load of 4.9N by means of CF-10F abrasive wheel, in the Taber abrasion test as prescribed in JIS R3212 (1998).
(14) An infrared shielding glass comprising a glass substrate having at least one surface thereof coated with a coating liquid containing fine particles of conductive oxide and a matrix component to thereby provide an infrared shielding film, characterized in that the infrared shielding film exhibits a transmittance at a wavelength of 1.0 µm of at most 95% and a transmittance at a wavelength of 2.0 µm of at most 30% and has a surface resistivity of at least 1 MΩ/□.
(15) The infrared shielding glass according to the above 14, wherein the infrared shielding film exhibits a visible light transmittance of at least 90% as prescribed in JIS R3106 (1998).
(16) A process for producing an infrared shielding glass as defined in any one of the above 1 to 15, which comprises coating at least one surface of a glass substrate with a coating liquid containing fine particles of conductive oxide and a matrix component, followed by firing at from 350 to 750°C for from 1 to 60 minutes.

### BRIEF DESCRIPTION OF THE DRAWING

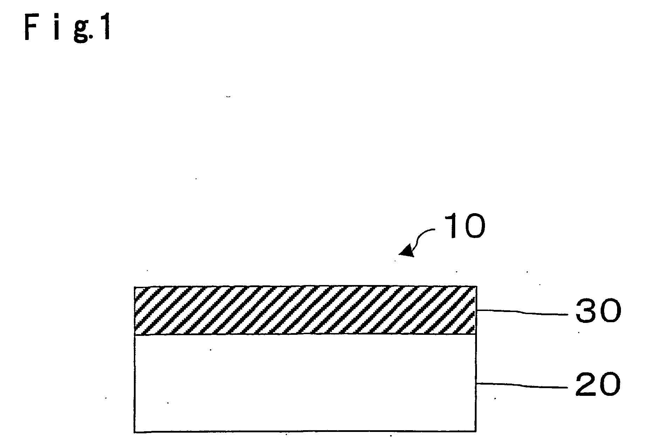

Fig. 1 is a schematic cross sectional view of the infrared shielding glass of the present invention.

### MODE FOR CARRYING OUT THE INVENTION

A schematic cross sectional view of one embodiment of the infrared shielding glass of the present invention is shown in Fig. 1. As shown in Fig. 1, an infrared shielding glass 10 has a structure comprising a glass substrate ₂₀ having at least one surface thereof coated with a coating liquid containing fine particles of conductive oxide and a matrix component to thereby provide an infrared shielding film ₃₀. The present invention is characterized in that the surface resistivity of the infrared shielding film is increased, and this characteristic is considered to be a result of such that contact of fine particles to one another has been restricted by highly dispersing the fine particles of conductive oxide without agglomeration in the infrared shielding film. Further, in the present invention, the infrared shielding film containing the fine particles of conductive oxide is capable of shielding infrared rays by plasma vibration by means of free electrons within the fine particles of conductive oxide, while maintaining the visible light transmittance at a high level.

Specifically, the fine particles of conductive oxide in the present invention may, for example, be at least one member selected from the group consisting of fine particles of ATO (antimony-doped tin oxide) and fine particles of fluorine-containing ITO (fluorinated ITO). It is preferred to use fine particles of ATO or fine particles of fluorinated ITO, since it is thereby possible to maintain a high infrared shielding property even after curing the coating material by firing at a high temperature, as described hereinafter, while maintaining the visible light transmittance at a high level. Conventional fine particles of ITO are not preferable, since the heat resistance is low, and the infrared shielding property deteriorates by firing at a high temperature. It is particularly preferred to employ fine particles of fluorinated ITO as the fine particles of conductive oxide, since it is thereby possible to maintain the visible light transmittance at a higher level than the fine particles of ATO.

The fine particles of ATO in the present invention can be prepared as follows.

An aqueous solution containing a water-soluble salt of antimony and a water-soluble salt of tin, is mixed with an alkaline solution to coprecipitate hydroxides of antimony and tin. This co-prepipitate is heated and fired in the atmosphere for conversion to an oxide thereby to prepare an ATO powder. In order to form the fine particles of ATO, the ATO powder prepared by such a method may be used as it is, or an ATO powder commercially available as a conductive powder may be used as it is. The antimony content in the ATO powder is preferably from 0.01 to 0.15 as a molar ratio of antimony/(antimony + tin), from the viewpoint of the infrared shielding property.

The above ATO powder is dispersed in water or in an organic solvent to prepare a dispersion containing fine particles of ATO. As such an organic solvent, an alcohol, an ether, a ketone, an ester, an aliphatic hydrocarbon, an aromatic hydrocarbon, etc., may suitably be selected for use. In such a case, a dispersant may be added to increase the dispersibility of the dispersion. As such a dispersant, an acryl polymer type dispersant may, for example, be mentioned. In a case where water is used as the solvent, it is preferred to adjust the pH to from 2 to 6, from the viewpoint of the dispersibility. After the preparation of the dispersion, in order to further improve the dispersibility, dispersing treatment may be carried out by means of a device such as ultrasonic irradiation, a homogenizer, a beads mill, a sand mill, a jet mill or a nanomizer. As an index for the dispersed state, a number average dispersed particle diameter may be employed, and it may be measured by e.g. a dynamic light scattering method. The number average dispersed particle diameter is preferably at most 200 nm, particularly preferably at most 100 nm, further preferably at most 50 nm, still further preferably at most 30 nm. If the number average dispersed particle diameter exceeds 200 nm, the transparency of the coating film may not be maintained when the film is formed.

The concentration (solid content concentration) of fine particles of ATO in the above dispersion is preferably from 1 to 50 mass%. If it is less than 1 mass%, the efficiency tends to be poor, and if it exceeds 50 mass%, the dispersion tends to be difficult, such being undesirable.

The fine particles of fluorinated ITO in the present invention are preferably ones having fluorine introduced into crystal lattice of fine particles of ITO, or ones having fluorine merely adsorbed. By the presence of fluorine in the fine particles of ITO, the heat resistance of fine particles of fluorinated ITO is improved, and even if they are fired at a high temperature in order to improve the durability of the coating film as described hereinafter, the infrared shielding property will not deteriorate.

The fine particles of fluorinated ITO of the present invention may be prepared, for example, as follows.

Firstly, an aqueous solution containing a water-soluble salt of indium and a water-soluble salt of tin, is mixed with an alkaline solution to coprecipitate indium hydroxide and tin hydroxide. This coprecipitate is heated and fired in the atmosphere for conversion to an oxide thereby to form an ITO powder. Not only a mixture of such hydroxides, but also a mixture of indium hydroxide and/or oxide and tin hydroxide and/or oxide, may widely be used. In order to form the fine particles of ITO, the ITO powder prepared in such a method may be used, or an ITO powder commercially available as a conductive powder may be used as it is. The ratio of tin to indium in the above ITO powder is preferably from 0.01 to 0.15 as a molar ratio of tin/(indium + tin) from the viewpoint of the infrared shielding property.

The above ITO powder is dispersed in a dispersing medium to prepare a dispersion of the fine particles of ITO. Such a dispersing medium may be water or an organic solvent, or a mixed solvent of water and an organic solvent. A dispersing medium capable of dispersing the ITO powder with good dispersibility, may be employed. As the organic solvent, an alcohol, an ether, a ketone, an ester, an aliphatic hydrocarbon, an aromatic hydrocarbon, etc., may suitably be selected or mixed for use. At that time, a dispersant may be added to the dispersion to improve the dispersibility of the dispersion. As such a dispersant, an acrylic polymer type dispersant may, for example, be mentioned. In a case where water is used as the solvent, the pH is preferably adjusted to be from 2 to 6 from the viewpoint of the dispersibility. After the preparation of the dispersion, in order to further improve the dispersibility, dispersing treatment may be carried out by means of a device such as ultrasonic irradiation, a homogenizer, a beads mill, a sand mill, a jet mill or a nanomizer.

The concentration (solid content concentration) of the ITO powder in the above dispersion is preferably from 1 to 50 mass%. If this concentration is less than 1 mass%, the efficiency tends to be poor, and if it exceeds 50 mass%, the dispersion tends to be difficult, such being undesirable.

A fluorine compound is added to the above dispersion to have the fluorine compound adsorbed (impregnated) to the fine particles of ITO thereby to prepare fine particles of fluorinated ITO. The fluorine compound may, for example, be an inorganic fluorine compound such as hydrofluoric acid, ammonium fluoride, an alkali metal fluoride (such as lithium fluoride or sodium fluoride), stannous fluoride, stannic fluoride, indium fluoride, ammonium hydrogenfluoride, hydrosilicofluoric acid, ammonium silicofluoride, borohydrofluoric acid, ammonium borofluoride, phosphohydrofluoric acid or ammonium phosphofluoride, or an organic fluorine compound such as a fluorinated resin. However, it is not particularly limited so long as it is a compound which is capable of releasing fluorine by the decomposition by firing as described hereinafter. Among such fluorine compounds, ammonium fluoride, stannous fluoride, indium fluoride or ammonium silicofluoride is preferably used from the viewpoint of the handling efficiency, impregnation efficiency, etc.

The fluorine compound,may be added to the dispersion as it is. However, it is preferred that a solution having a fluorine compound preliminarily dissolved, is added to the dispersion, since it is thereby possible to uniformly adsorb the fluorine compound to the fine particles of ITO. As the solvent to have the fluorine compound dissolved therein, water, an alcohol, an ether, a ketone, an ester, an aliphatic hydrocarbon, an aromatic hydrocarbon, etc. may be suitably selected or mixed for use, but it is required to be a solvent which can be uniformly mixed with the dispersion. The amount of the fluorine compound varies depending upon the type of the fluorine compound and the subsequent treating conditions, but it is preferably from 1 to 100 mass%, based on the fine particles of ITO. If it is less than 1 mass%, the amount of fluorine to be adsorbed, tends to be inadequate, whereby no adequate heat resistance may be obtained. If it exceeds 100 mass%, fluorine tends to be excessive, such being undesirable from the viewpoint of economical efficiency.

The mixed solution obtained by adding a fluorine compound to the dispersion, is subjected to stirring, heat treatment, etc., as the case requires. Thereafter, the solvent in the mixed solution is removed by a known method such as heating at a temperature of not higher than 200°C in the atmosphere under reduced pressure, filtration, centrifugal separation, etc., to obtain an ITO powder having the fluorine compound adsorbed thereon.

The ITO powder having the fluorine compound adsorbed, thus obtained by the above method, is then fired in a non-oxidizing atmosphere or in vacuum to form a fluorinated ITO powder. The non-oxidizing atmosphere is an atmosphere which does not substantially contain an oxidizing gas such as oxygen or carbon dioxide gas. Specifically, it is preferably one having an oxygen concentration of at most 1.0 vol%, particularly at most 0.1 vol%, with a view to suppressing oxidation of ITO during the firing. By carrying out the firing of the ITO powder having the fluorine compound adsorbed thereon, in a non-oxidizing atmosphere or in vacuum, fluorine will be introduced into the crystal lattice of ITO, whereby it is considered possible to impart high heat resistance to the ITO powder. The non-oxidizing atmosphere includes a non-oxidizing gas such as nitrogen, argon or ammonia. In order to obtain a good infrared shielding property of the fluorinated ITO powder after the firing, the non-oxidizing atmosphere preferably contains hydrogen, and the content of hydrogen is preferably from 1 to 5 vol%, particularly preferably from 1 to 4 vol%, in the non-oxidizing atmosphere.

With respect to the temperature for the firing, the optimum value varies depending upon the type of the added fluorine compound, but it is usually from 300 to 800°C. If this firing temperature is lower than 300°C, the decomposition of the adsorbed fluorine compound tends to hardly proceed, whereby fluorine tends to hardly be introduced into the ITO powder, and if it exceeds 800°C, no further improvement in the effect for introducing fluorine will be obtained, such being undesirable from the viewpoint of the energy efficiency. The time for the firing is preferably from 30 minutes to 24 hours, and after the firing, the powder is preferably cooled in the same non-oxidizing atmosphere to a temperature in the vicinity of room temperature.

The fluorinated ITO powder produced by the above method, is excellent in heat resistance and is useful particularly as an infrared shielding film material for vehicles. The content of tin in the fluorinated ITO powder is preferably from 0.01 to 0.15, particularly preferably from 0.04 to 0.12, by a mol ratio of tin/(indium + tin), from the viewpoint of the infrared shielding property.

The fluorine concentration in the fluorinated ITO powder (i.e. fluorine/(ITO + fluorine)) in the present invention is preferably from 0.1 to 10 mass%, particularly preferably from 1 to 10 mass%, further preferably from 1 to 5 mass%. If the fluorine concentration is less than 0.1 mass%, the effect to improve the heat resistance tends to be low, and if it exceeds 10 mass%, the infrared shielding property itself may deteriorate. The mode of incorporation of fluorine may either be a mixed case or an adsorbed case, but fluorine is preferably introduced into the crystal lattice, from the viewpoint of the heat resistance.

The heat resistance of the fluorinated ITO powder may be estimated by the spectral reflectance of the fluorinated ITO powder. Such a spectral reflectance may be obtained by firstly packing the ITO powder in a cell, and measuring the total diffuse reflection at the surface of the packed ITO powder by a spectrophotometer provided with an integrating sphere in accordance with JIS-Z8722 (2000). The maximum wavelength of such a spectral reflectance is closely related with the infrared shielding property of the measured ITO powder, and as the maximum wavelength of the spectral reflectance is located on a short wavelength side, the infrared shielding property will be better. Namely, even after the firing, if the maximum wavelength of the spectral reflectance is on a short wavelength side just like before the firing, such may be regarded as excellent in heat resistance.

As compared with an ITO powder containing no fluorine, the fluorinated ITO powder has high heat resistance, whereby even if it is fired in the atmosphere at a high temperature, the spectral reflectance will not substantially move to the longer wavelength side. Particularly when the coating film containing the fluorinated ITO powder is applied to glass for vehicles, firing can efficiently be carried out by employing a heating process for reinforcing processing of a window glass. This heating process is carried out, in many cases, in the atmosphere at a temperature of from 600 to 700°C for from 3 to 4 minutes, and taking into consideration the temperature, etc. of this heating process, it is, for example, preferred to evaluate the heat resistance under firing conditions of 700°C for 10 minutes in the atmosphere. Even after subjected to such very severe firing, the fluorinated ITO powder exhibits a spectral reflectance with the maximum wavelength of at most 550 nm and thus has adequate heat resistance. The fluorinated ITO powder after the firing is particularly preferably such that the maximum wavelength of its spectral reflectance is at most 500 nm, further preferably at most 460 nm.

The reason as to why the heat resistance is improved by introduction of fluorine into ITO, is not clearly understood. However, it is considered that fluorine is trapped in an oxygen deficient site in the ITO lattice and occupies the site, and when exposed to a high temperature in the atmosphere, it prevents oxygen from entering into the oxygen deficient site, whereby the heat resistance is excellent.

The fine particles of fluorinated ITO in the present invention may be formed by dispersing the fluorinated ITO powder in a dispersion. The fine particles of fluorinated ITO are preferably highly dispersed in the coating liquid without agglomeration, and it is preferred to employ a colloidal dispersion having the fine particles of fluorinated ITO preliminarily dispersed in a dispersing medium, as the coating liquid. Such fine particles of fluorinated ITO can be obtained by dispersing by means of a sand mill, a beads mill, a supersonic dispersion method, or the like. As an index of the dispersed state of the fine particles, a number average dispersed particle diameter may be employed, and it may be measured by e.g. a dynamic light scattering method. The number average dispersed particle diameter of the fine particles of fluorinated ITO is preferably at most 200 nm, particularly preferably at most 100 nm. If the number average dispersed particle diameter exceeds 200 nm, the transparency of the coating film when formed into the film, may not be maintained. Further, such a dispersion may be optionally diluted with an alcohol, water or the like to obtain a coating liquid. The fluorine concentration in the fine particles of fluorinated ITO in the dispersion or in the coating liquid is not particularly changed even when the fluorinated ITO powder is dispersed in a coating liquid and is equal to the fluorine concentration in the fluorinated ITO powder, and it is preferably from 0.1 to 10 mass%, particularly preferably from 1 to 10 mass%, further preferably from 1 to 5 mass%. If it is less than 0.1 mass%, the effect to improve the heat resistance tends to be low, and if it exceeds 10 mass%, the infrared shielding property itself tends to be deteriorated.

The concentration (solid content concentration) of the fine particles of fluorinated ITO in the above dispersion is preferably from 1 to 50 mass%. If this concentration is less than 1 mass%, the efficiency tends to be poor, and if it exceeds 50 mass%, the dispersion tends to be difficult, such being undesirable.

In the present invention, the coating liquid to form an infrared shielding film, is formed by a dispersion containing fine particles of conductive oxide. The average primary particle diameter of the fine particles of conductive oxide in the coating liquid is preferably at most 100 nm, particularly preferably at most 50 nm, further preferably at most 20 nm, in the case of fine particles of ATO, and preferably at most 100 nm, particularly preferably at most 50 nm, in the case of fine particles of fluorinated ITO. If the average primary particle diameter exceeds 100 nm, the transparency of the infrared shielding film tends to deteriorate due to scattering of light, such being undesirable.

In the present invention, the coating liquid to form an infrared shielding film, contains a matrix component in addition to the fine particles of conductive oxide. The matrix component not only functions as a dispersing medium for the fine particles of conductive oxide but also suppresses contact of the fine particles of conductive oxide with one another thereby to improve the durability or the adhesion of the coating film to the substrate. The matrix component is preferably a precursor of silicon oxide. Specifically, it may, for example, be one obtained by subjecting a silane compound to hydrolysis and polycondensation, a non-modified silicon resin, a modified silicon resin or water glass. When the durability or adhesion to the substrate, of the coating film to be formed, is taken into consideration, it is preferred to employ a matrix component obtained by subjecting a silane compound to hydrolysis and polycondensation by means of a so-called sol-gel method.

Here, the silane compound is a compound represented by the formula RₐSiY₄₋ₐ (wherein a is 0, 1 or 2, R is a C₁₋₈ alkyl group, a C₆₋₈ aryl group, a C₂₋₈ alkenyl group or a hydrogen atom, when a is 2, the two R may be the same or different from each other, Y is a hydrolyzable group such as a C₁₋₈ alkoxy group, a C₁₋₈ alkoxyalkoxy group, a chlorine atom, a bromine atom or an iodine atom, and the plurality of Y may be the same or different from one another), and particularly preferred is one wherein Y is a methoxy group or an ethoxy group.

The above silane compounds may be used alone or in combination as a mixture of two or more of them. Further, such a silane compound may be hydrolyzed and polycondensed by adding water and, if necessary, a catalyst. The property as a binder will be provided by the hydrolysis of the hydrolyzable groups such as alkoxy groups, and by controlling the conditions for the hydrolysis, a proper polycondensed structure may be formed in the coating liquid, and the hardness of the coating film formed, may be increased.

Further, in the coating liquid, a compound of e.g. zirconium, titanium, aluminum, boron or phosphorus which will be a matrix component, may be added. Particularly, it is preferred to disperse fine particles of silica or alumina having an average primary particle diameter of at most 50 nm in the coating liquid, whereby a thick coating film having high durability, can be obtained.

Further, it is preferred that in the coating liquid, the fine particles of conductive oxide and the matrix component are contained in a ratio of from 1:9 to 9:1, particularly from 3:7 to 7:3, by mass ratio as calculated as oxides. If the ratio of the fine particles of conductive oxide to the matrix component is less than 1/9, the infrared shielding property tends to deteriorate, such being undesirable, and if it exceeds 9/1, the film strength tends to deteriorate, such being undesirable. Further, as the fine particles of conductive oxide, plural types of fine particles of conductive oxides may be employed, and in such a case, it is preferred that the total amount of the plural types of fine particles of conductive oxides satisfies the above mass ratio. Further, the solid content (the total amount of the fine particles of conductive oxides and the matrix component) is preferably from 1 to 30 mass%, particularly preferably from 5 to 20 mass%, based on the solvent, in view of control efficiency of the film thickness after the coating.

In the present invention, a method of applying the above coating liquid to the glass substrate is not particularly limited, and a spray method, a dipping method, a roll coating method, a meniscus coating method, a spin coating method, a screen printing method or a flexo printing method may, for example, be used. Further, after the coating, it is preferred to carry out heating to cure the infrared shielding film thereby to obtain high durability. Specifically, it is preferred to carry out firing at a temperature of from 350 to 750°C for from 1 to 60 minutes in the atmosphere or in an inert gas. By such firing, an infrared shielding film having high durability and comprising the fine particles of conductive oxide and the matrix, will be formed. If the heating temperature is lower than 350°C, the network of the matrix component may not sufficiently be formed, and the durability may be low, and if it exceeds 750°C, the glass constituting the substrate may undergo deformation. Particularly preferably, the firing is carried out at a temperature of from 550 to 750°C for from 1 to 20 minutes. In a case where the firing temperature is high, it is preferred to shorten the firing time from the viewpoint of economical efficiency. Further, from the viewpoint of the productivity and economical efficiency, it is preferred to carry out the heating in the atmosphere rather than in an inert gas. The fine particles of conductive oxide such as fine particles of ATO or fine particles of fluorinated ITO, have adequate heat resistance even after the firing in the atmosphere in which ordinary ITO fine particles would undergo oxidation and would have its infrared shielding property reduced, and also have high durability, and accordingly, they are useful as a material for a coating film of an infrared shielding glass.

In a case where the fine particles of conductive oxide are fine particles of fluorinated ITO, the fluorine concentration in the fine particles of fluorinated ITO in the infrared shielding film to be formed, is preferably from 0.05 to 10 mass%, particularly preferably from 0.05 to 8 mass%, further preferably from 0.05 to 5 mass%. As mentioned above, the fluorine concentration in the fine particles of fluorinated ITO in the coating liquid is preferably from 0.1 to 10 mass%, but by the firing during the film forming, fluorine in the fine particles of fluorinated ITO will evaporate to some extent, and accordingly, the fluorine concentration in the fine particles in fluorinated ITO in the infrared shielding film will be from 0.05 to 10 mass% as a preferred range from the viewpoint of heat resistance.

In the present invention, the average primary particle diameter of the fine particles of conductive oxide in the infrared shielding film, is preferably at most 100 nm, particularly preferably at most 50 nm, further preferably at most 20 nm, in the case of the fine particles of ATO, or at most 100 nm, particularly preferably at most 50 nm, in the case of the fine particles of fluorinated ITO. If the average primary particle diameter exceeds 100 nm, the transparency of the infrared shielding film tends to deteriorate due to scattering of light, such being undesirable.

An infrared shielding film of the present invention formed by having at least one surface of a glass substrate coated with a coating liquid containing the fine particles of conductive oxide and the matrix component, has characteristics such that the visible light transmittance is high, the transparency is excellent, and the infrared transmittance is low. It is preferred that the visible light transmittance of the infrared shielding film is at least 90%, the transmittance at a wavelength of 1.0 µm is at most 95%, and the transmittance at a wavelength of 2.0 µm is at most 30%. Further, it is preferred that the change in each of the visible light transmittance, the transmittance at a wavelength of 1.0 µm and the transmittance at a wavelength of 2.0 µm before and after the infrared shielding film is fired in the atmosphere at 660°C for 5 minutes, is at most 20%, particularly preferably at most 10%.

As the glass substrate to be used in the present invention, it is preferred to use a glass substrate having a visible light transmittance of at least 70%, a transmittance at a wavelength of 1.0 µm of at most 45% and a transmittance at a wavelength of 2.0 µm of from 40 to 70% (hereinafter referred to as a G1 substrate). Specifically, a heat absorbing glass having a green type transmitted color, to be used for e.g. glass for automobiles, may be mentioned. The thickness of the glass substrate is not particularly limited so long as it has the above-mentioned characteristics, and it is preferably from about 1.5 to 7 mm.

An infrared shielding glass employing the above G1 substrate as a glass substrate and having an infrared shielding film on the glass substrate, has a high infrared shielding property over the entire infrared region (from about 0.8 to 2.7 µm) and has a high heat shielding property.

The infrared shielding glass having an infrared shielding film formed by coating at least one surface of the above G1 substrate with a coating liquid containing the fine particles of conductive oxide and the matrix component, will be an ideal infrared shielding glass which has a high visible light transmittance, is excellent in transparency and has a high infrared shielding property.

With the infrared shielding glass having an infrared shielding film in the present invention formed on one surface of the G1 substrate, it is preferred that the visible light transmittance is at least 70%, the transmittance at a wavelength of 1.0 µm is at most 35%, the transmittance at a wavelength of 2.0 µm is at most 20%, and the difference between the visible light transmittance of the infrared shielding glass and the visible light transmittance of the G1 substrate is within 10%. More preferably, the transmittance at a wavelength of 1.0 µm is at most 30%, and the transmittance at a wavelength of 2.0 µm is at most 10%. Further, the infrared shielding film may be formed not only on one surface of the G1 substrate but also on both surfaces.

Further, as the glass substrate to be used in the present invention, it is preferred to employ a glass substrate (hereinafter referred to as a G2 substrate) which exhibits a visible light transmittance of at least 70%, a transmittance at a wavelength of 1.0 µm of at most 30% and a transmittance at a wavelength of 2.0 µm of from 40 to 50%. Specifically, a high heat absorbing glass having a green type transmitted color and having the infrared shielding property improved, to be used for e.g. glass for automobiles, may be mentioned.

The infrared shielding glass employing the above G2 substrate as a glass substrate and having an infrared shielding film formed on the glass substrate, has a high infrared shielding property over the entire infrared region (from about 0.8 to 2.7 µm) and has a high heat insulating property. Further, the thickness of the above glass substrate is not particularly limited so long as it has the above characteristics, and it is preferably from about 1.5 to 7 mm.

The infrared shielding glass having an infrared shielding film formed by coating at least one surface of the above G2 substrate with a coating liquid containing the fine particles of conductive oxide and the matrix component, will be an ideal infrared shielding glass which has a high visible light transmittance, is excellent in transparency and has a low transmittance in an infrared region.

In the infrared shielding glass having the infrared shielding film in the present invention formed on the G2 substrate, it is preferred that the visible light transmittance is at least 70%, the transmittance at a wavelength of 1.0 µm is at most 25%, the transmittance at a wavelength of 2.0 µm is at most 15%, and the difference between the visible light transmittance of the infrared shielding glass and the visible light transmittance of the G2 substrate is within 10%. More preferably, in the above infrared shielding glass, the transmittance at a wavelength of 1.0 µm is at most 20%, and the transmittance at a wavelength of 2.0 µm is at most 10%. Further, such an infrared shielding film may be formed not only on one surface of the glass substrate but also on both surfaces.

Further, the infrared shielding glass of the present invention has a coating film having fine particles of conductive oxide dispersed in the matrix, whereby contact of the fine particles of conductive oxide with one another is considered to be restricted, and the surface resistivity tends to be very high as compared with a usual continuous electroconductive film obtainable by a dry method such as a sputtering method or a vapor deposition method, and electromagnetic waves can pass therethrough without reflection at the surface of the infrared shielding glass. Specifically, the surface resistivity of the infrared shielding film is preferably at least 1 MΩ/□, and if it is lower than 1 MΩ/□, the transmittance of electromagnetic waves for communication which tend to be high frequency, may not be maintained. Such a surface resistivity is more preferably at least 10 MΩ/□, particularly preferably at least 100 MΩ/□, from the viewpoint of the electromagnetic wave transmittance.

In the present invention, the thickness of the infrared shielding film is preferably from 0.1 to 5.0 µm. If the thickness is less than 0.1 µm, no adequate infrared shielding property may be imparted, and if the thickness exceeds 5.0 µm, cracks are likely to form in the infrared shielding film, or the electromagnetic wave transmittance tends to deteriorate. The thickness is more preferably from 0.5 to 5.0 µm, particularly preferably from 0.5 to 3.0 µm, further preferably from 0.7 to 2.0 µm.

Applications of the infrared shielding glass of the present invention are not particularly limited, and glass for a vehicle such as an automobile or glass for building may, for example, be mentioned. Especially when it is used as glass for a vehicle such as an automobile, the glass base plate is subjected to bending and tempering treatment, since such glass base plate is required to have a shape and strength suitable for a vehicle. Such bending and tempering treatment are carried out by heat treatment at a temperature of from 650 to 750°C for from 2 to 7 minutes in the atmosphere. Accordingly, if such bending and tempering treatment are carried out after coating the glass base plate with the coating liquid of the present invention, firing of the infrared shielding glass can simultaneously be carried out, such being economically advantageous.

The infrared shielding glass of the present invention is suitably used for applications where a high infrared shielding property is required. For example, it may be used for applications such as for vehicles, buildings, railways, ships, etc. It is particularly useful as a single plate front side glass for an automobile.

### EXAMPLES

Now, the present invention will be described in further detail with reference to Examples. However, the present invention is by no means restricted to such Examples. Here, the average primary particle diameter of fine particles of conductive oxide in the formed infrared shielding film was measured by observation under a transmission electron microscope (H-9000, manufactured by Hitachi, Ltd.), and the obtained infrared shielding glass was evaluated as follows.
1) Film thickness: The thickness of the infrared shielding film was measured by a stylus profilometer (Dektak3030, manufactured by SLOAN).
2) Visible light transmittance (Tᵥ): The transmittance of the infrared shielding glass at a wavelength of from 380 to 780 nm was measured by a spectral photometer (U-3500, manufactured by Hitachi, Ltd.), and the visible light transmittance was calculated in accordance with JIS-R3106 (1998). Further, the visible light transmittance of the infrared shielding film only was obtained by calculating the absorbance of the coating film only from the transmittance of the substrate glass and the transmittance of the film-coated glass.
3) Infrared transmittance: The transmittance (T₁) at a wavelength of 1 µm of the infrared shielding glass and the transmittance (T₂) at a wavelength of 2 µm of the infrared shielding glass were measured by a spectrophotometer (U-3500, manufactured by Hitachi, Ltd.). Further, T₁ and T₂ of the infrared shielding film alone were obtained by calculating the absorbance of the coating film only from the transmittance of the substrate glass and the transmittance of the film-coated glass.
4) Surface resistivity: The surface resistivity of the infrared shielding film was measured by a surface resistance measuring device (LORESTA MCP-T250 model, manufactured by MITSUBISHI CHEMICAL CORPORATION).
5) Electromagnetic wave attenuation: The attenuation of electromagnetic waves of 1GHz passed through the infrared shielding glass was measured by a network analyzer (8510B, manufactured by Hewlett-Packard Company).
6) Abrasion resistance: By a Taber abrasion test prescribed in JIS R3212 (1998), the haze after 1,000 rotations under a load of 4.9 N by means of a CS-10F abrasive wheel, was measured by means of a haze meter prescribed in JIS R3212 (1998). A haze of at most 7%, particularly at most 5%, is practically preferred.

### EXAMPLES WHEREIN CONDUCTIVE OXIDE IS ATO

### EXAMPLE 1

Tin oxide containing 16 mol% of antimony, obtained by a coprecipitation method from an aqueous solution of stannic chloride and antimony chloride, was dispersed in an aqueous potassium hydroxide solution (pH=10) by means of a sand mill, and then potassium ions in the solution were removed by means of a cation exchange resin to obtain an ATO dispersion (dispersion A) having an average primary particle diameter of 10 nm and a solid content of 20 mass%. The number average dispersed particle diameter of ATO in dispersion A was 20 nm.

The average primary particle diameter was directly observed by a transmission electron microscope (H-9000, manufactured by Hitachi, Ltd.), and the number average dispersed particle diameter was measured by a dynamic light scattering method (ELS-8000, manufactured by Otsuka Electronics Co., Ltd.). In the following Examples, the measurements were made by the same methods.

10 g of dispersion A was vigorously stirred, and while maintaining the liquid temperature at 10°C, 4.1 g of methyltrimethoxysilane and 0.7 g of tetramethoxysilane were slowly dropwise added, followed by stirring for 60 minutes. After returning the mixture to room temperature, 12 g of ethanol was added to obtain a coating liquid B. The ratio of ATO:silica in the coating liquid B was 50:50 as calculated as oxides (mass%), and the solid content concentration was 15 mass%. The coating liquid B was applied by a spin coating method on one side of a highly heat absorbing green glass (UVFL, trade name, manufactured by Asahi Glass Company, Limited, Tᵥ: 76%, T₁: 20%, T₂: 47%) having a thickness of 3.5 mm and dried in the air atmosphere at 120°C for 5 minutes and then fired for 5 minutes in an electric furnace maintained at 660 °C in the air atmosphere, to obtain an infrared shielding glass. The ratio of ATO:silica in this infrared shielding film was the same as in the coating liquid B. Further, the average primary particle diameter of the fine particles of ATO in the formed infrared shielding film was 10 nm.

The film thickness, the visible light transmittance, the infrared transmittance, the surface resistivity and the electromagnetic wave attenuation of the obtained infrared shielding glass were evaluated, and the results are shown in Table 1.

### EXAMPLE 2

2.7 g of ethanol, 0.2 g of acetylacetone, 0.7 g of zirconium tetrabutoxide and 0.5 g of a 1.2% hydrochloric acid aqueous solution were mixed and stirred for one hour, and the liquid thereby obtained was slowly added to 10 g of liquid A with stirring, followed by ultrasonic irradiation for one hour to obtain liquid C. To the liquid C, separately prepared liquid D (4.2 g of ethanol, 3.65 g of methyltrimethoxysilane, 0.45 g of tetramethoxysilane and 4.2 g of distilled water were added and stirred for one hour) was added to obtain a coating liquid E. The ratio of ATO:(silica + zirconia) in the coating liquid E was 50:50 as calculated as oxides (mass%), and the solid content concentration was 15 mass%.

The coating liquid E was applied by a spin coating method on one side of a highly heat absorbing green glass (Tᵥ: 76%, T₁: 20%, T₂: 47%) having a thickness of 3.5 mm, dried at 120°C for 5 minutes in the air atmosphere and then fired for 5 minutes in an electric furnace maintained at 660°C in the air atmosphere, to obtain an infrared shielding glass. The ratio of ATO:(silica + zirconia) of this infrared shielding film was the same as in the coating fluid E. Further, the average primary particle diameter of the fine particles of ATO in the formed infrared shielding film, was 10 nm.

The film thickness, the visible light transmittance, the infrared transmittance, the surface resistivity and the electromagnetic wave attenuation, of the obtained infrared shielding glass, was evaluated, and the results are shown in Table 1.

### EXAMPLE 3

An infrared shielding glass was obtained by treatment in the same manner as in Example 1 except that instead of using the highly heat absorbing green glass having a thickness of 3.5 mm, a heat absorbing green glass having a thickness of 3.5 mm (VFL, trade name, manufactured by Asahi Glass Company, Limited, Tᵥ: 81%, T₁: 36%, T₂: 61%) having a thickness of 3.5 mm was used.

The film thickness, the visible light transmittance, the infrared transmittance, the surface resistivity and the electromagnetic wave attenuation, of the obtained infrared shielding glass, were evaluated, and the results are shown in Table 1.

### EXAMPLE 4

An infrared shielding glass was obtained by treatment in the same manner as in Example 1 except that instead of using the highly heat absorbing green glass having a thickness of 3.5 mm, a highly heat absorbing green glass (Tᵥ: 82%, T₁: 39%, T₂: 63%) having a thickness of 2.0 mm was used, and instead of on one side, on both sides of the glass substrate, the infrared shielding films having a thickness of 1.0 µm, were respectively formed.

The film thickness, the visible light transmittance, the infrared transmittance, the surface resistivity and the electromagnetic attenuation of the obtained infrared shielding glass, were evaluated, and the results are shown in Table 1.

### EXAMPLE 5: COMPARATIVE EXAMPLE

350 ml of 2-propanol, 125 ml of an aqueous solution containing 60% of stannic chloride, 5 g of antimony trichloride, 5 ml of methanol were mixed to obtain a coating liquid J. The coating liquid J was sprayed by a spray gun on one side of a highly heat absorbing green glass (Tᵥ: 76%, T₁: 20%, T₂: 47%) having a thickness of 3.5 mm preliminarily heated to 600°C, and then cooled to obtain an infrared shielding glass having an ATO film containing no matrix component formed on one side.

The film thickness, the visible light transmittance, the infrared transmittance, the surface resistivity and the electromagnetic wave attenuation, of the obtained infrared shielding glass were evaluated, and the results are shown in Table 1.

### EXAMPLE 6: COMPARATIVE EXAMPLE

An infrared shielding glass was obtained by treatment in the same manner as in Example 1 except that instead of using the highly heat absorbing green glass having a thickness of 3.5 mm, a transparent soda lime glass (Tᵥ: 89%, T₁: 79%, T₂: 86%) having a thickness of 3.5 mm was used.

The film thickness, the visible light transmittance, the infrared transmittance, the surface resistivity and the electromagnetic wave attenuation, of the obtained infrared shielding glass, were evaluated, and the results are shown in Table 1.

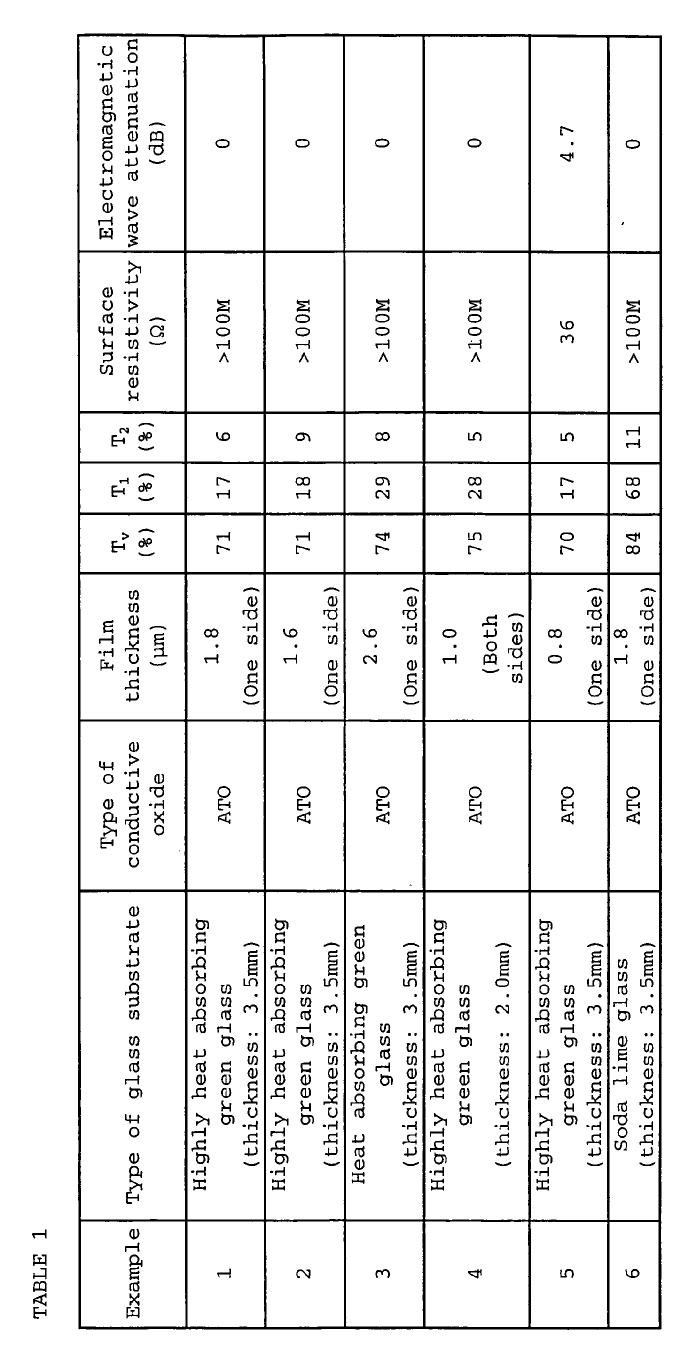

As is evident from the above results, the infrared shielding glasses of Examples 1 to 4 are capable of effectively shielding infrared rays over the entire infrared region without lowering the surface resistivity and further capable of maintaining the visible light transmittance at a high level.

In Example 5, no matrix component is contained in the coating liquid, whereby the surface resistivity of the infrared shielding film is low, and the electromagnetic attenuation is large, such being undesirable as an infrared shielding glass of the present invention. Further, in Example 6, a transparent soda lime glass substrate is used as the glass substrate, whereby the infrared transmittance of the near infrared region (wavelength: from 0.8 to 1.5 µm) is particularly high, such being undesirable as an infrared shielding glass of the present invention.

### EXAMPLES WHEREIN THE CONDUCTIVE OXIDE IS FLUORINATED ITO

### (1) Preparation of dispersion (liquid L) of fine particles of fluorinated ITO

An aqueous solution containing 1 mass% of ammonia was dropwise added to an aqueous solution having tin chloride and indium chloride dissolved so that the molar ratio of tin/(indium + tin) would be 0.05 (metal concentration: 0.1 mol/liter), to coprecipitate indium hydroxide and tin hydroxide. Chloride ions, ammonium ions and water freed from the coprecipitate were removed by centrifugal separation, and the coprecipitate was fired at 600°C for two hours in the atmosphere to obtain an ITO powder having an average primary particle diameter of 30 nm.

120 g of the obtained ITO powder was added to 280 g of deionized water having the pH adjusted 3 by nitric acid, followed by dispersion treatment by means of a wet system jet mill, to obtain a dispersion having fine particles of ITO dispersed. The average primary particle diameter of the fine particles of ITO in the obtained dispersion was 100 nm, and the solid content concentration in the obtained dispersion was 26 mass%.

100 g of this dispersion was put into a container made of a propylene resin and provided with a cover, having an internal capacity of 500 ml, and 25.3 g of a 10 mass% ammonium fluoride aqueous solution (corresponding to 5 mass% of fluorine based on (ITO + fluorine)) was added as a fluorine compound, followed by stirring at 40°C for 30 minutes in a warm bath. Thereafter, water was removed by drying at 70°C for 12 fours, and the powder thereby obtained was put into an angular mortar made of alumina and subjected to firing at 400°C for two hours in a nitrogen atmosphere containing 3 vol% of hydrogen and cooled in a nitrogen atmosphere containing the same 3 vol% of hydrogen. Thereafter, the obtained powder was put into pure water having a volume 100 times the volume of the powder, followed by filtration and washing to remove excess ammonium fluoride. The obtained powder was roughly pulverized in a mortar to obtain a fluorinated ITO powder.

The fluorine concentration in the obtained fluorinated ITO powder was quantified as follows. Namely, sodium hydroxide was added to the fluorinated ITO powder, and the mixture was fused, cooled and then dissolved in pure water. The obtained solution was neutralized by an addition of hydrochloric acid and then, a citric acid ion intensified buffer solution having a 1.0 mol/liter sodium citrate aqueous solution adjusted with hydrochloric acid to pH 6, was added to prepare a liquid to be measured, whereupon the content of fluorine was measured by means of a fluorine ion electrode, and the ratio to the content of (ITO + fluorine) was obtained by calculation. The fluorine concentration in the fluorinated ITO powder was 1.8 mass%.

20 g of the obtained fluorinated ITO powder was added to a solvent mixture comprising 40 g of deionized water adjusted with nitric acid to pH 3 and 40 g of ethanol, followed by dispersion treatment by means of a wet system jet mill, to obtain a dispersion (liquid L) having a solid content concentration of 20 mass%. The average primary particle diameter of the fine particles of fluorinated ITO in the liquid L was 40 nm, and the number average dispersed particle diameter was 90 nm.

### (2) Preparation of dispersion (liquid M) of fine particles of ITO

Fine particles of ITO containing no fluorine were obtained in the same manner as for the dispersion A except that the 10 mass% ammonium fluoride aqueous solution was not added, and the step of filtering and washing the powder in pure water of 100 times by volume, was not carried out. The fluorine concentration in the fine particles of ITO containing no fluorine, as measured by means of an ion electrode in the same manner as in (1), was 0.0 mass%.

20 g of the obtained fine particles of ITO was added into a solvent mixture comprising 40 g of deionized water adjusted with nitric acid to pH 3 and 40 g of ethanol, followed by dispersion treatment by means of a wet system jet mill to obtain a dispersion (liquid M) having a solid content concentration of 20 mass%. The average primary particle diameter of the fine particles of ITO containing no fluorine in the liquid M was 30 nm, and the number average dispersed particle diameter was 90 nm.

### EXAMPLE 8

4 g of methyltrimethoxysilane, 0.5 g of tetramethoxysilane and 12 g of ethanol were mixed to 10 g of the dispersion (liquid L) and stirred at 40°C for two hours in the atmosphere to obtain a coating liquid. The solid content concentration in the coating liquid was 15 mass%, and the average primary particle diameter of the fine particles of fluorinated ITO was 30nm. The obtained coating liquid was formed into a film by a spin coating method on a highly heat absorbing green glass (UVFL, trade name, manufactured by Asahi Glass Company, Limited, Tᵥ=76%, T₁=20%, T₂=47%) of 100 mm × 100 mm × 3.5 mm. The film was dried at 120°C in the atmosphere for 5 minutes, and after the drying, an infrared shielding glass was obtained. Tᵥ, T₁ and T₂ of the obtained infrared shielding glass were measured.

Then, firing was carried out at 660°C in the atmosphere for 5 minutes, and an infrared shielding glass after the firing, was obtained. The film thickness, Tᵥ, T₁, T₂, the surface resistivity, the abrasion resistance and the fluorine concentration in the film, of the obtained infrared shielding glass were measured. The production conditions for the infrared shielding glass are shown in Table 2, the evaluation results of the infrared shielding glass after the drying and after the firing, are shown in Table 3. Further, the results of evaluation of Tᵥ, T₁, and T₂ of the infrared shielding film are shown in Table 4.

Here, for the fluorine concentration in the fine particles of fluorinated ITO in the film, the infrared shielding film was scraped off and formed into a powder, and sodium hydroxide was added thereto. The mixture was fused, cooled and then dissolved in pure water. The obtained solution was neutralized by an addition of hydrochloric acid, and then, a citric acid ion intensified buffering solution having a 1.0 mol/liter sodium citrate aqueous solution adjusted with hydrochloric acid to pH 6, was added to obtain a liquid to be measured, whereupon the content of fluorine was measured by means of a fluorine ion electrode. Separately, the content of ITO was measured by an ICP method,-and the fluorine concentration was obtained by calculation.

### EXAMPLE 9

The same treatment as in Example 8 was carried out except that instead of firing at 660°C in the atmosphere for 5 minutes, firing was carried out at 400°C in the atmosphere for 15 minutes, and the infrared shielding glass after the drying and after the firing was evaluated. The production conditions for the infrared shielding glass are shown in Table 2, the evaluation results of the infrared shielding glass after the drying and after the firing are shown in Table 3, and the results of evaluation of Tᵥ, T₁ and T₂ of the infrared shielding film are shown in Table 4.

### EXAMPLE 10

The same treatment as in Example 8 was carried out except that instead of the combined use of 4 g of metyltrimethoxysilane and 0.5 g of tetramethoxysilane, 4.5 g of metyltrimethoxysilane was used alone, and the infrared shielding glass after the drying and after the firing was evaluated. The production conditions for the infrared shielding glass are shown in Table 2, the evaluation results of the infrared shielding glass after the drying and after the firing are shown in Table 3, and the results of evaluation of Tᵥ, T₁ and T₂ of the infrared shielding film are shown in Table 4.

### EXAMPLE 11

The same treatment as in Example 8 was carried out except that instead of the combined use of 4 g of methyltrimethoxysilane and 0.5 g of tetramethoxysilane, 3 g of methyltrimethoxysilane and 1.5 g of tetramethoxysilane were used in combination, and the infrared shielding glass after the drying and the after the firing was evaluated. The production conditions for the infrared shielding glass are shown in Table 2, the evaluation results of the infrared shielding glass after the drying and after the firing are shown in Table 3, and the results of evaluation of Tᵥ, T₁ and T₂ of the infrared shielding film are shown in Table 4.

### EXAMPLE 12: COMPARATIVE EXAMPLE

The same treatment as in Example 8 was carried out except that instead of using the dispersion (liquid L), the dispersion (liquid M) (i.e. the dispersion of fine particles of ITO containing no fluorine) was used, and the infrared shielding glass after the drying and after the firing was evaluated. The production conditions for the infrared shielding glass are shown in Table 2, the evaluation results of the infrared shielding glass after the drying and after the firing are shown in Table 3, and the results of evaluation of Tᵥ, T₁ and T₂ of the infrared shielding film are shown in Table 4.

### EXAMPLE 13: COMPARATIVE EXAMPLE

The same treatment as in Example 8 was carried out except that the firing at 660°C for 5 minutes in the atmosphere was not carried out, and the infrared shielding glass after the drying was evaluated. The production conditions for the infrared shielding glass are shown in Table 2, the evaluation results of the infrared shielding glass after the drying are shown in Table 3, and the results of evaluation of Tᵥ, T₁ and T₂ of the infrared shielding film are shown in Table 4.

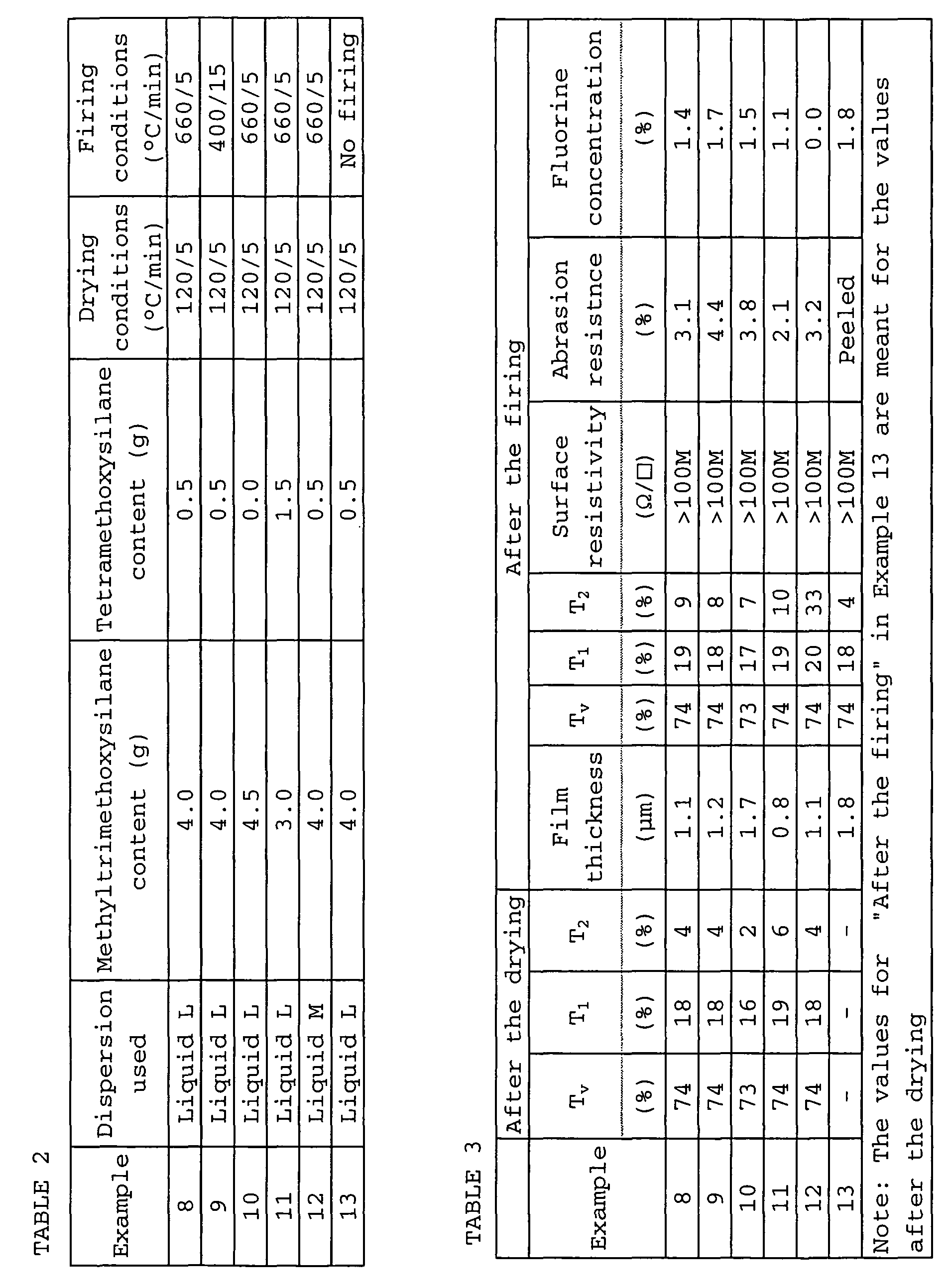

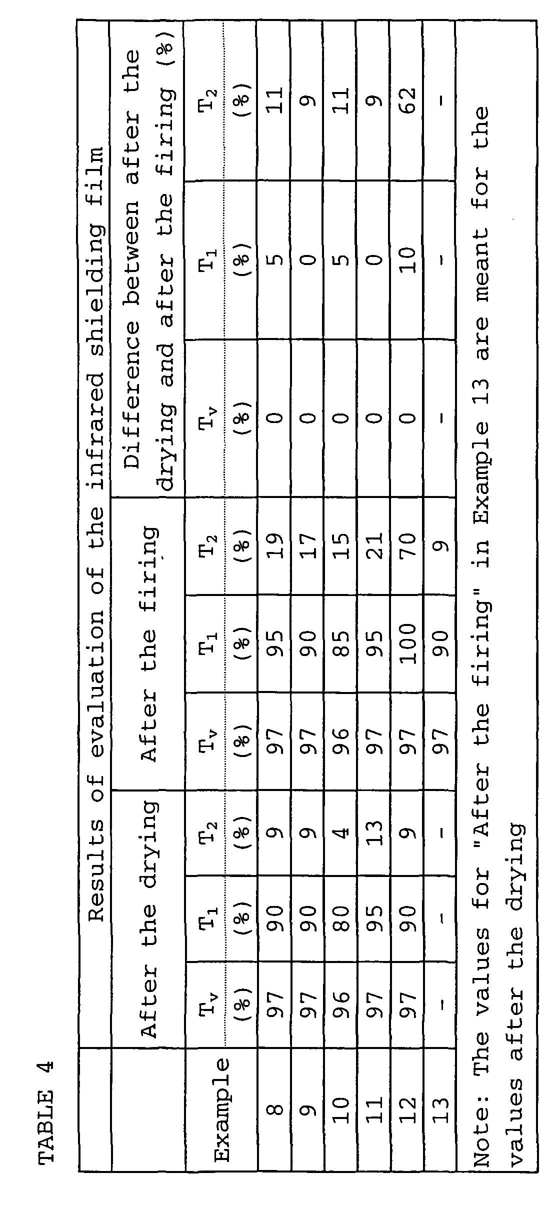

As is evident from the results in Tables 2 to 4, the infrared shielding glasses having a coating film containing fluorinated ITO particles in Examples 8 to 11, have infrared shielding properties and electromagnetic wave transmittance even after the heat treatment at a high temperature and have highly abrasion resistant coating films formed by firing at a high temperature and thus have high durability. Further, as a result of the analysis of the state of In in the powder by X-ray photoelectron spectrometry (XPS), it was confirmed that fluorine was present as bonded to In, and fluorine was introduced into the crystal lattice of ITO.

Further, the infrared shielding glass in Example 12 as a Comparative Example, contained particles of ITO containing no fluorine, whereby T₂ was remarkably increased by the firing at a high temperature, such being undesirable as an infrared shielding glass.

Further, with the infrared shielding glass in Example 13 as a Comparative Example, the curing was carried out at a low temperature where no oxidation of ITO took place, whereby it had a high infrared shielding property and electromagnetic wave shielding property, but the durability of the coating film was low, such being undesirable.

### INDUSTRIAL APPLICABILITY

The infrared shielding glass of the present invention may be subjected to firing at a high temperature and has high durability, and thus it is useful even at a site where the coating film is exposed in the air. Further, it has a high electromagnetic wave transmittance, whereby in a case where an electromagnetic wave receiver and/or an electromagnetic wave transmitter (such as an antenna) is disposed in a room, electromagnetic waves to be received by the electromagnetic wave receiver or transmitted electromagnetic waves will not be attenuated, and in a case where an infrared shielding film is to be formed to cover a printed antenna of the printed antenna-coated glass, it is possible to prevent attenuation of the electromagnetic waves by the infrared shielding film, thereby to prevent decrease of the gain of the antenna. Further, it is also possible to prevent electromagnetic disturbance of mobile phones which have become widely used in recent years. Further, the infrared shielding glass of the present invention has a low infrared transmittance, is excellent in the heat insulation property and has a high visible light transmittance, and thus, it is useful as glass for automobile, glass for building, etc.

## Claims

1. An infrared shielding glass comprising a glass substrate having at least one surface thereof coated with a coating liquid containing fine particles of conductive oxide and a matrix component to thereby provide an infrared shielding film, **characterized in that** the infrared shielding glass exhibits a transmittance at a wavelength of 1.0 µm of at most 35% and a transmittance at a wavelength of 2.0 µm of at most 20% and that the infrared shielding film has a surface resistivity of at least 1 MΩ/□.

2. The infrared shielding glass according to Claim 1, which exhibits a visible light transmittance of at least 70% as prescribed in JIS R3106 (1998).

3. The infrared shielding glass according to Claim 1 or 2, wherein the glass substrate exhibits a visible light transmittance of at least 70% as prescribed in JIS R3106 (1998), a transmittance at a wavelength of 1.0 µm of at most 45% and a transmittance at a wavelength of 2.0 µm of from 40 to 70%.

4. The infrared shielding glass according to Claim 1 or 2, wherein the infrared shielding glass exhibits a transmittance at a wavelength of 1.0 µm of at most 25% and a transmittance at a wavelength of 2.0 µm of at most 15%.

5. The infrared shielding glass according to Claim 4, wherein the glass substrate exhibits a visible light transmittance of at least 70% as prescribed in JIS R3106 (1998), a transmittance at a wavelength of 1.0 µm of at most 30% and a transmittance at a wavelength of 2.0 µm of from 40 to 50%.

6. The infrared shielding glass according to any one of Claims 1 to 5, wherein the difference between the visible light transmittance of the infrared shielding glass and the visible light transmittance of the glass substrate is within 20%.

7. The infrared shielding glass according to any one of Claims 1 to 6, wherein the fine particles of conductive oxide in the infrared shielding film has an average primary particle diameter of at most 100 nm.

8. The infrared shielding glass according to any one of Claims 1 to 7, wherein the infrared shielding film has a film thickness of from 0.1 to 5.0 µm.

9. The infrared shielding glass according to any one of Claims 1 to 8, wherein in the coating liquid, the fine particles of conductive oxide and the matrix component are contained in the ratio of the fine particles of conductive oxide : the matrix = 1:9 to 9:1 by mass ratio as calculated as oxides.

10. The infrared shielding glass according to any one of Claims 1 to 9, wherein the fine particles of conductive oxide are at least one member selected from the group consisting of fine particles of ATO and fine particles of fluorinated ITO.

11. The infrared shielding glass according to Claim 10, wherein the coating liquid contains fine particles of fluorinated ITO, and the fine particles of fluorinated ITO has a fluorine concentration of from 0.1 to 10 mass%.

12. The infrared shielding glass according to Claim 10, wherein the infrared shielding film contains fine particles of fluorinated ITO, and the fine particles of fluorinated ITO has a fluorine concentration of from 0.05 to 10 mass%.

13. The infrared shielding glass according to any one of Claims 1 to 12, which has a haze of at most 7% as measured by a haze meter prescribed in JIS R3212 (1998), after 1,000 rotations under a load of 4.9N by means of CF-10F abrasive wheel, in the Taber abrasion test as prescribed in JIS R3212 (1998).

14. An infrared shielding glass comprising a glass substrate having at least one surface thereof coated with a coating liquid containing fine particles of conductive oxide and a matrix component to thereby provide an infrared shielding film, **characterized in that** the infrared shielding film exhibits a transmittance at a wavelength of 1.0 µm of at most 95% and a transmittance at a wavelength of 2.0 µm of at most 30% and has a surface resistivity of at least 1 MΩ/□.

15. The infrared shielding glass according to Claim 14, wherein the infrared shielding film exhibits a visible light transmittance of at least 90% as prescribed in JIS R3106 (1998).

16. A process for producing an infrared shielding glass as defined in any one of Claims 1 to 15, which comprises coating at least one surface of a glass substrate with a coating liquid containing fine particles of conductive oxide and a matrix component, followed by firing at from 350 to 750°C for from 1 to 60 minutes.
